(19) **Europäisches Patentamt / European Patent Office / Office européen des brevets**

(11) **EP 4 749 478 A1**

(12) **EUROPEAN PATENT APPLICATION**
published in accordance with Art. 153(4) EPC

(43) Date of publication:
**27.05.2026 Bulletin 2026/22**

(21) Application number: **23946220.3**

(22) Date of filing: **26.07.2023**

(51) International Patent Classification (IPC):
**G06F 16/901** (2019.01)

(52) Cooperative Patent Classification (CPC):
**G06F 16/901**

(86) International application number:
**PCT/CN2023/109388**

(87) International publication number:
**WO 2025/020133 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventor: **GUO, Daifei**
**Beijing 100102 (CN)**

(74) Representative: **Isarpatent**
**Patent- und Rechtsanwälte Part G mbB**
**Friedrichstrasse 31**
**80801 München (DE)**

(54) **ASSET INFORMATION MANAGEMENT METHOD AND APPARATUS, ELECTRONIC DEVICE, AND STORAGE MEDIUM**

(57) This application provides an asset information management method and apparatus, an electronic device, and a storage medium. The asset information management method includes: obtaining first asset information of a current operation technology device in an industrial network; determining key attribute information from the first asset information, where the key attribute information includes a value of a key attribute of the current operation technology device; obtaining second asset information from an asset information database, where the second asset information includes asset information of an operation technology device in the industrial network; determining an asset type of the current operation technology device based on the key attribute information and the second asset information; and processing the first asset information based on the asset type of the current operation technology device. This solution can reduce costs of managing asset information of an OT device.

FIG. 1

## Description

### TECHNICAL FIELD

This application relates to the field of industrial automation technologies, and in particular, to an asset information management method and apparatus, an electronic device, and a storage medium.

### BACKGROUND

An operation technology (Operation Technology, OT) is a professional technology that provides a technical support for an automation control system of a factory, to ensure normal production. An OT device is configured to provide technical support for the automatic control system. The OT device includes an upper computer, an engineer station, an operator station, a server, a programmable logic controller (Programmable Logic Controller, PLC), and the like. Various types of OT devices exist in an industrial network. To ensure security and reliability of operation of the industrial network, security monitoring needs to be performed on the OT devices in the industrial network. When security monitoring is performed on an OT device, obtained security data needs to be associated with asset information of the OT device, to perform security analysis on the OT device based on the security data.

When an attribute of the OT device changes, the asset information of the OT device needs to be updated. When a new OT device is added to the industrial network, new asset information needs to be generated. Currently, the asset information of the OT device is managed manually.

However, the industrial network includes a large quantity of OT devices, and OT devices are of various types. Deletion and addition of an OT device and change of an attribute of the OT device frequently occur. Managing asset information of the OT device manually consumes a large amount of manpower, resulting in high costs of asset information management.

### SUMMARY

In view of this, this application provides an asset information management method and apparatus, an electronic device, and a storage medium, which can reduce costs of managing asset information of an OT device.

According to a first aspect of embodiments of this application, an asset information management method is provided, including: obtaining first asset information of a current operation technology device in an industrial network; determining key attribute information from the first asset information, where the key attribute information includes a value of a key attribute of the current operation technology device; and obtaining second asset information from an asset information database, where the second asset information includes asset information of an operation technology device in the industrial network; determining an asset type of the current operation technology device based on the key attribute information and the second asset information; and processing the first asset information based on the asset type of the current operation technology device.

According to a second aspect of embodiments of this application, an asset information management apparatus is provided, including: a first obtaining unit, configured to obtain first asset information of a current operation technology device in an industrial network; an extraction unit, configured to determine key attribute information from the first asset information, where the key attribute information includes a value of a key attribute of the current operation technology device; a second obtaining unit, configured to obtain second asset information from an asset information database, where the second asset information includes asset information of an operation technology device in the industrial network; an analysis unit, configured to determine an asset type of the current operation technology device based on the key attribute information and the second asset information; and a processing unit, configured to process the first asset information based on the asset type of the current operation technology device.

According to a third aspect of embodiments of this application, an electronic device is provided, including: a processor, a memory, a communications interface, and a bus. The processor, the memory, and the communications interface communicate with each other via the bus. The memory is configured to store at least one executable instruction. The executable instruction causes the processor to perform operations corresponding to the asset information management method according to the first aspect.

According to a fourth aspect of embodiments of this application, a computer-readable storage medium is provided. The computer-readable storage medium has computer instructions stored therein. The computer instructions, when executed by a processor, cause the processor to perform the asset information management method according to the first aspect.

According to a fifth aspect of embodiments of this application, a computer program product is provided. The computer program product is tangibly stored in a computer-readable medium and includes computer-executable instructions. The computer-executable instructions, when executed, cause at least one processor to perform the asset information management method according to the first aspect.

As can be known from the foregoing technical solutions, after first asset information of a current operation technology device is obtained, key attribute information is extracted from the first asset information, an asset type of the current operation technology device is determined based on the key attribute information and second asset information obtained from an asset information database, and then the first asset information is correspondingly processed based on the asset type of the current operation technology device. The asset type of the current operation technology device may indicate whether the current operation technology device is an existing asset or a new asset. The first asset information is processed based on the asset type of the current operation technology device, to implement automatic management of asset information. Manual participation is not needed in an asset information management process, and labor costs in the asset information management process are reduced, thereby reducing costs of asset information management.

**BRIEF DESCRIPTION OF THE DRAWINGS**

FIG. 1 is a flowchart of an asset information management method according to an embodiment of this application;
FIG. 2 is a schematic diagram of an industrial network according to an embodiment of this application;
FIG. 3 is a flowchart of an asset type identification method according to an embodiment of this application;
FIG. 4 is a schematic diagram of an asset information management apparatus according to an embodiment of this application; and
FIG. 5 is a schematic diagram of an electronic device according to an embodiment of this application.

Reference Numerals:

| | |
|---|---|
| 101: | Obtain first asset information of a current operation technology device in an industrial network |
| 102: | Extract key attribute information from the first asset information |
| 103: | Obtain second asset information from an asset information database |
| 104: | Determine an asset type of the current operation technology device based on the key attribute information and the second asset information |
| 105: | Process the first asset information based on the asset type of the current operation technology device |
| 301: | Classify, based on attribute type configuration information, a plurality of attributes corresponding to key attribute information into a plurality of attribute groups |
| 302: | Determine attributes corresponding to different values in the key attribute information and the second asset information as differential attributes |
| 303: | Determine an attribute group including at least one differential attribute as a differential attribute group |
| 304: | Determine an asset type of a current operation technology device based on the differential attribute and the differential attribute group |

| | | | | | |
|---|---|---|---|---|---|
| 100: | Asset information management method | 200: | Industrial network | 300: | Asset type identification method |
| 400: | Asset information management apparatus | 500: | Electronic device | 201: | Operation technology device |
| 202: | Switch | 203: | Data acquisition device | 204: | Asset information management module |
| 205: | Agent program | | 401: | First obtaining unit | 402: | Extraction unit |

(continued)

| 403: | Second obtaining unit | 404: | Analysis unit | 405: | Processing unit |
|---|---|---|---|---|---|
| 502: | Processor | 504: | Communications interface | 506: | Memory |
| 508: | Bus | 510: | Program | | |

**DETAILED DESCRIPTION**

As described above, an industrial network includes various types of OT devices. To ensure reliability and security of operation of an OT device, security monitoring needs to be performed on the OT device. Security data obtained in a security monitoring process is associated with asset information of the OT device, to perform security analysis on the corresponding OT device based on the security data. The asset information of the OT device may indicate an attribute of the OT device. When the attribute of the OT device changes, the asset information needs to be updated. When the attribute of the OT device changes significantly, the changed attribute needs to be determined as a new asset. Therefore, it is necessary to determine whether updating asset information refers to adding new asset information or updating existing asset information. Currently, the asset information of the OT device is managed manually, to distinguish between the new asset information and the update of the existing asset information. However, since there are a large quantity of OT devices of multiple types, asset information is newly added and frequently updated. Managing the asset information manually needs to consume a large amount of manpower, resulting in high costs of asset information management.

In an embodiment of this application, first asset information of an OT device is extracted from traffic data and/or data acquired by an agent program, key attribute information of the OT device is extracted from the first asset information, and the key attribute information is compared with second asset information stored in an asset information database, to determine an asset type of the OT device, to be specific, determine whether the OT device is a newly added asset or an existing asset. Then, the first asset information is processed based on the asset type. If the OT device is a newly added asset, an asset identifier is allocated to the first asset information. If the OT device is an existing asset, asset information of the OT device in the asset information database is updated based on the first asset information. Manual participation is not needed in an asset information management process, and labor costs in the asset information management process are reduced, thereby reducing costs of asset information management.

The following describes an asset information management method and apparatus, an electronic device, and a storage medium provided in embodiments of this application in detail with reference to the accompanying drawings. It should be noted that in the following embodiments, an operation technology device is the foregoing OT device.

Asset Information Management Method

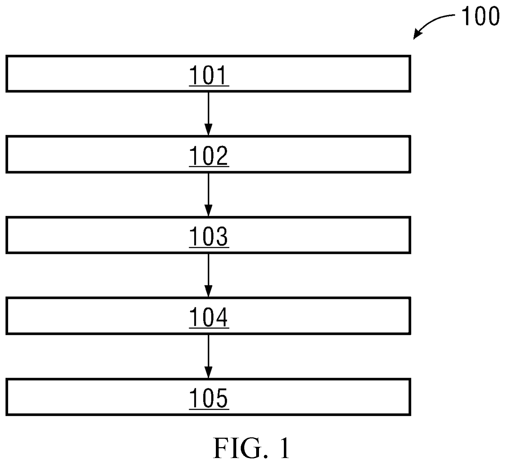

FIG. 1 is a flowchart of an asset information management method according to an embodiment of this application. As shown in FIG. 1, the asset information management method includes the following steps:
Step 101: Obtain first asset information of a current operation technology device in an industrial network.

The current operation technology device is a device in the industrial network. The industrial network includes one or more operation technology devices. The operation technology device may be an upper computer, an engineer station, an operator station, a server, a PLC, or the like. The current operation technology device may be an original operation technology device in the industrial network, or may be a newly added operation technology device in the industrial network.

Asset information includes attribute values of at least a portion of attributes of the operation technology device, such as an asset IP address, an asset MAC address, an asset port, an asset name, asset operating system information, asset key application information, an asset device certificate, an asset application certificate, and the like. The first asset information includes at least a portion of asset information of the current operation technology device. For example, the first asset information includes an IP address, a MAC address, port information, a name, operating system information, key application information, a device certificate, an application certificate, and the like of the current operation technology device.

Step 102: Extract key attribute information from the first asset information.

The key attribute information includes a value of a key attribute of the current operation technology device. The key attribute is an important attribute among a plurality of attributes of the operation technology device. The change of the value of the key attribute may cause an existing asset to change to a new asset. To be specific, when an operation technology device changes from an existing asset to a new asset, values of at least a portion of key attributes of the operation technology device change. However, it should be noted that the change of the value of the key attribute does not necessarily cause the operation technology device to change from an existing asset to a new asset.

After the first asset information is obtained, key attribute information of the current operation technology device is extracted from the first asset information. The key attribute information may include an asset IP address, an asset MAC address, asset key application information, and an asset device certificate. It should be understood that key attribute information of different operation technology devices may correspond to the same or different key attributes. For example, key attribute information of a first type of operation technology device includes values of attribute 1, attribute 2, and attribute 3, and key attribute information of a second type of operation technology device includes values of attribute 2, attribute 3, and attribute 4.

Step 103: Obtain second asset information from an asset information database.

The asset information database is configured to store asset information of operation technology devices in the industrial network. The asset information of original operation technology devices in the industrial network is stored in the asset information database. To be specific, the asset information database stores asset information of an existing asset. The asset information stored in the asset information database is read as the second asset information. Since the asset information in the asset information database is dynamically updated, the second asset information obtained at different moments may be different.

Step 104: Determine an asset type of the current operation technology device based on the key attribute information and the second asset information.

After the key attribute information of the current operation technology device is obtained and the second asset information is obtained, the obtained key attribute information is compared with the second asset information, and the asset type of the current operation technology device is determined based on a matching relationship between the key attribute information and the second asset information. For example, whether the current operation technology device is an existing asset or a new asset is determined.

Since the key attribute information of the operation technology device newly added to the industrial network is significantly different from the key attribute information of the original operation technology device in the industrial network, the key attribute information of the operation technology device newly added to the industrial network is significantly different from the second asset information. When the original operation technology device in the industrial network changes from an existing asset to a new asset, the key attribute information of the operation technology device changes sinificantly. To be specific, the key attribute information of the operation technology device that changes from an existing asset to a new asset because of a large change in attribute information greatly differs from the second asset information. Therefore, the key attribution information of the operation technology device newly added to the industrial network and the key attribution information of the operation technology device that changes from an existing asset to a new asset because of a large change in attribution information are both significantly different from the second asset information. Therefore, the asset type of the current operation technology device may be determined based on a difference between the key attribute information and the second asset information.

Step 105: Process the first asset information based on the asset type of the current operation technology device.

For a new asset in the industrial network, asset information of the new asset needs to be stored, so that security monitoring and security analysis are performed on the new asset based on the asset information. For an existing asset in the industrial network, asset information of the existing asset needs to be updated, to ensure correctness of association between the asset information and security data, thereby ensuring accuracy of security analysis performed on the existing asset.

After the asset type of the current operation technology device is determined, the asset information (the first asset information) of the current operation technology device is correspondingly processed based on the asset type of the current operation technology device, to implement automatic management of the asset information of the operation technology device in the industrial network.

In this embodiment of this application, after first asset information of a current operation technology device is obtained, key attribute information is extracted from the first asset information, an asset type of the current operation technology device is determined based on the key attribute information and second asset information obtained from an asset information database, and then the first asset information is correspondingly processed based on the asset type of the current operation technology device. The asset type of the current operation technology device may indicate whether the current operation technology device is an existing asset or a new asset. The first asset information is processed based on the asset type of the current operation technology device, to implement automatic management of asset information. Manual participation is not needed in an asset information management process, and labor costs in the asset information management process are reduced, thereby reducing costs of asset information management.

In a possible implementation, when the first asset information of the current operation technology device is obtained, traffic data of the current operation technology device may be acquired from a mirror port of a switch connected to the current operation technology device, and then attribute information of the current operation technology device is extracted from the acquired traffic data as the first asset information. In addition to extracting the attribute information of the current operation technology device from the traffic data as the first asset information, the attribute information of the current operation technology device may further be acquired as the first asset information by using an agent program set in the current operation technology device.

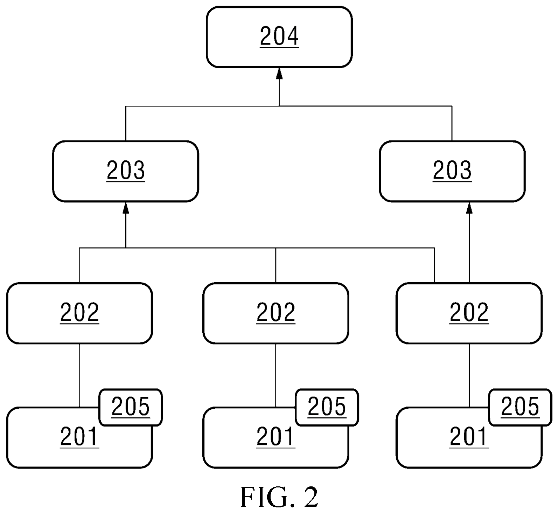

FIG. 2 is a schematic diagram of an industrial network according to an embodiment of this application. As shown in FIG. 2, an operation technology device 201 in an industrial network is connected to a switch 202. A measurement device, a driver device, and the like in the industrial network are directly or indirectly connected to the switch 202. The operation technology device 201 is connected to another operation technology device 201 or measurement device, driver device, and the like via the switch 202. A data acquisition device 203 is connected to a mirror port on at least one switch 202. Different data acquisition devices 203 may be connected to a mirror port on the same switch 202. The data acquisition device 203 may acquire traffic data of the operation technology device 201 through the mirror port on the switch 202. The industrial network shown in FIG. 2 includes three switches 202. A person skilled in the art should understand that the industrial network may alternatively include another number of switches 202.

After acquiring the traffic data of the operation technology device 201, the data acquisition device 203 may send the traffic data to an asset information management module 204. The asset information management module 204 may extract attribute information of the current operation technology device from the traffic data as first asset information. The traffic data is communication data exchanged between the operation technology device and another device in the industrial network. Device information and network behavior information of the operation technology device may be determined based on the traffic data.

An agent program 205 is set in the operation technology device 201. The agent program 205 may acquire attribute information of the operation technology device 201. The agent program 205 may push the acquired attribute information to the asset information management module 204, or the asset information management module 204 may pull the attribute information from the agent program 205. The asset information management module 204 may determine the attribute information obtained from the agent program 205 as the first asset information of the current operating technical device.

In an example, the communication between the asset information management module 204 and the agent program 205 may be implemented via the switch 202 and the data acquisition device 203. To be specific, after the agent program 205 acquires the attribute information, the attribute information is first transmitted from the agent program 205 to the switch 202, transmitted from the switch 202 to the data acquisition device 203, and then transmitted from the data acquisition device 203 to the asset information management module 204. The asset information management module 204 may communicate with the agent program 205 by using a protocol such as SNMP, syslog, RDP, or SSH, to obtain, in a push or pull manner, the attribute information acquired by the agent program 205.

In another example, the asset information management module 204 and the agent program 205 may communicate with each other over a separate data acquisition network. To be specific, the asset information management module 204 and the agent program directly communicate with each other over the data acquisition network, without forwarding data via the switch 202 and the data acquisition device 203.

The agent program 205 installed in the operation technology device 201 may analyze a quantity of network interfaces installed in the operation technology device 201 and particular network interfaces in an active state, and then obtain IP address and MAC address information from the operation technology device 201. In an example, the agent program 205 may run a command "Ipconfig/all" in the operation technology device 201 on which a windows operating system is installed, to obtain IP address and MAC address information of a network interface card.

The attribute information extracted from the traffic data and the attribute information acquired by the agent program 205 may both include one or more of an asset IP address, an asset MAC address, asset port information, an asset name, operating system information, key application information, an asset device certificate, and an asset application certificate.

It should be noted that all of the attribute information included in the first asset information may be extracted from the traffic data, or all of the attribute information may be acquired by the agent program. Alternatively, a portion of the attribute information may be extracted from the traffic data while the rest of the attribute information may be acquired by the agent program. This is not limited in this embodiment of this application.

In this embodiment of this application, an operation technology device communicates with another device in an industrial network through a switch, and traffic data of the operation technology device is acquired through a mirror port on the switch. The traffic data includes communication data between the operation technology device and the another device, and attribute information of the operation technology device can be extracted from the traffic data. An agent program is installed on the operation technology device, and the agent program may acquire the attribute information of the operation technology device. The first asset information may include the attribute information extracted from the traffic data, and/or the attribute information acquired by the agent program, to ensure that the obtained first asset information comprehensively includes the attribute information of the operation technology device, thereby ensuring the accuracy of an asset type of the operation technology device determined based on the first asset information and further ensuring the accuracy of asset information.

In a possible implementation, when key attribute information is determined from the first asset information, a key attribute of the current operation technology device may be determined based on key attribute configuration information. Then, a value of the key attribute of the current operation technology device is extracted from the first asset information, and the extracted value of the key attribute is determined as the key attribute information.

Key attributes of different operation technology devices may be different based on differences in device types, purposes, security levels, and the like of the operation technology devices. The key attribute configuration information defines the key attribute of the current operation technology device. For example, the key attribute configuration information defines the key attribute of the current operation technology device, including an asset IP address, an asset MAC address, asset key application information, and an asset device certificate.

After the key attribute of the current operation technology device is determined, the value of the key attribute of the current operation technology device may be extracted from the first asset information, and then the extracted value of the key attribute is used as the first asset information of the current operation technology device. It should be understood that the first asset information may include only values of some key attributes of the current operation technology devices, and therefore, corresponding attribute values cannot be extracted from the first asset information for other key attributes of the current operation technology devices. To be specific, a quantity of key attributes corresponding to the key attribute information is less than or equal to a quantity of key attributes defined by the key attribute configuration information.

In this embodiment of this application, a key attribute of a current operation technology device is determined based on key attribute configuration information, and then a value of the key attribute is extracted from the first asset information as key attribute information. A user may define key attribute configuration information as required, to set the key attribute of the operation technology device, and adjust an attribute based on which an asset type of the operation technology device is determined, so as to meet personalized requirements of different users and satisfy different application scenarios, thereby improving the applicability and user satisfaction of the asset information management method.

In a possible implementation, when the asset type of the current operation technology device is determined based on the key attribute information and second asset information, if the second asset information does not include the key attribute information, the current operation technology device is determined as a new asset; or if the second asset information includes at least a portion of key attribute information, the asset type of the current operation technology device is determined based on a matching degree between the key attribute information and the second asset information.

The key attribute information includes the value of the key attribute of the current operation technology device, and the second asset information includes attribute information of an original operation technology device in the industrial network. If the second asset information does not include the key attribute information, it indicates that the current operation technology device is not the original operation technology device in the industrial network. To be specific, the current operation technology device is an operation technology device newly added to the industrial network, and therefore, the current operation technology device is determined as a new asset. It should be noted that the second asset information not including the key attribute information means that the second asset information does not include asset information of any asset that is the same as the key attribute information.

If the second asset information includes at least a portion of key attribute information, it indicates that the current operation technology device is an existing operation technology device in the industrial network, but a large change in an attribute of the operation technology device makes the operation technology device become a new asset. A larger change in the attribute of the current operation technology device indicates a larger difference between the key attribute information and the asset information of the current operation technology device in the second asset information. Therefore, the asset type of the current operation technology device may be determined based on the matching degree between the key attribute information and the second asset information, to determine whether the current operation technology device becomes a new asset or is still an existing asset.

In this embodiment of this application, an asset type of a current operation technology device is determined based on a matching degree between key attribute information and second asset information. If the second asset information does not include the key attribute information (the matching degree between the key attribute information and the second asset information is zero), the current operation technology device is determined as a new asset. If the second asset information includes at least a portion of key attribute information, the asset type of the current operation technology device is determined based on the matching degree between the key attribute information and the second asset information, thereby ensuring the accuracy of the determined asset type and further ensuring the accuracy of asset information management.

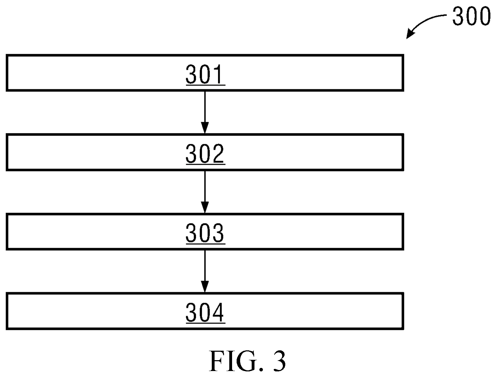

FIG. 3 is a flowchart of an asset type identification method according to an embodiment of this application. As shown in FIG. 3, when an asset type of a current operation technology device is determined based on a matching degree between key attribute information and second asset information, the asset type of the current operation technology device may be identified by using the following asset type identification method 300:

Step 301: Classify, based on attribute type configuration information, a plurality of attributes corresponding to the key attribute information into a plurality of attribute groups.

The attribute type configuration information defines an attribute grouping rule. Based on the attribute type configuration information, the plurality of attributes corresponding to the key attribute information may be classified into the plurality of attribute groups. Each attribute group includes at least one attribute, and different attribute groups include different attributes.

In an example, a result of classifying, based on the attribute type configuration information, the attributes corresponding to the key attribute information into the plurality of attribute groups is {attribute group 1 (attribute 1, attribute 2, attribute 3, ...), attribute group 2 (attribute 1, attribute 2, attribute 3, ...), attribute group 3 (attribute 1, attribute 2, attribute 3, ...) , ...}. In this example, there are at least three attribute groups, and each attribute group includes at least three attributes. A person skilled in the art should understand that a quantity of attribute groups and a quantity of attributes included in each attribute group may alternatively be other values.

Attributes included in the same attribute group are attributes of the same type. For example, the attributes corresponding to the key attribute information include an asset IP address, an asset MAC address, an asset key application, and an asset device certificate. The asset IP address includes IP address 1, IP address 2, IP address 3, and the like. The asset MAC address includes MAC address 1, MAC address 2, MAC address 3, and the like. IP address 1, IP address 2, IP address 3, and the like that are included in the asset IP address are classified into one attribute group. The attributes included in the attribute group are IP address 1, IP address 2, IP address 3, and the like. MAC address 1, MAC address 2, MAC address 3, and the like that are included in the asset MAC address are classified into one attribute group. The attributes included in the attribute group are MAC address 1, MAC address 2, MAC address 3, and the like.

There may be one or more attributes included in the attribute group. For example, an IP address attribute group includes a plurality of attributes such as IP address 1, IP address 2, and IP address 3. An asset device certificate attribute group includes one attribute such as an asset device certificate.

Step 302: Determine attributes corresponding to different values in the key attribute information and the second asset information as differential attributes.

The key attribute information is compared with the second asset information, existing asset information of the current operation technology device in the second asset information is determined based on a key attribute having a corresponding attribute value unchanged, and attributes corresponding to different values in the key attribute information and the existing asset information are determined as differential attributes. For example, if corresponding attribute values of the attribute namely IP address 1 in the key attribute information and the existing asset information are different, the attribute namely IP address 1 is determined as a differential attribute. If corresponding attribute values of the attribute namely MAC address 1 in the key attribute information and the existing asset information are the same, the attribute namely MAC address 1 is not determined as a differential attribute.

Step 303: Determine an attribute group including at least one differential attribute as a differential attribute group.

After the differential attributes in the plurality of attributes corresponding to the key attribute information are determined, an attribute group including one or more differential attributes is determined as a differential attribute group based on an attribute group to which the differential attributes belong. For example, if there is one differential attribute in attributes included in attribute group 1, attribute group 1 is determined as a differential attribute group. If there are a plurality of differential attributes in attributes included in attribute group 2, attribute group 2 is determined as a differential attribute group. If there is no differential attribute in attributes included in attribute group 3, attribute group 3 is not determined as a differential attribute group.

Step 304: Determine the asset type of the current operation technology device based on the differential attribute and the differential attribute group.

The differential attribute is an attribute of the current operation technology device being changed, and the differential attribute group is an attribute group of the current operation technology device being changed. The differential attribute and the differential attribute group may reflect an attribute change degree of the current operation technology device as a whole, thereby further determining the asset type of the current operation technology device based on the attribute change degree.

In this embodiment of this application, a differential attribute is determined from attributes of current operation technology device, and a differential attribute group is determined from attribute groups of the current operation technology device. The differential attribute reflects an attribute change of the current operation technology device from an attribute perspective. The differential attribute group reflects the attribute change of the current operation technology device from an attribute group perspective. An attribute change status of the current operation technology device can be reflected more comprehensively with reference to the differential attribute and the differential attribute group. Further, an asset type of the current operation technology device is determined based on the differential attribute and the differential attribute group, thereby ensuring the accuracy and appropriateness of identifying the asset type of the current operation technology device.

In a possible implementation, after the differential attributes in the plurality of attributes corresponding to the key attribute information are determined, a quantity of the differential attributes is counted, to obtain a first quantity of the differential attributes. After the differential attribute groups in the attribute groups are determined, a quantity of the differential attribute groups is counted, to obtain a second quantity of the differential attribute groups. Then, the first quantity and the second quantity may be compared with preset quantity thresholds. The asset type of the current operation technology device is determined based on a magnitude relationship between the first quantity and the quantity threshold, as well as a magnitude relationship between the second quantity and the quantity threshold. Specifically, the asset type of the current operation technology device may be determined according to the following rule:

(1) If the first quantity is greater than a first quantity threshold and the second quantity is greater than a second quantity threshold, the current operation technology device is determined as a new asset.

That the first quantity is greater than the first quantity threshold indicates that a large quantity of attributes of the current operation technology device are changed. That the second quantity is greater than the second quantity threshold indicates that a large quantity of attribute groups of the current operation technology device are changed. Since a large quantity of attribute groups and a large quantity of attributes of the current operation technology device are changed, the current operation technology device is determined as a new asset.

The first quantity threshold and the second quantity threshold are preset quantity thresholds. A magnitude relationship between the first quantity threshold and the second quantity threshold is not limited in this embodiment of this application. For example, the first quantity threshold may be greater than or equal to the second quantity threshold, or the first quantity threshold may be less than the second quantity threshold. In an example, the first quantity threshold is 2, and the second quantity threshold is 8. In another example, the first quantity threshold and the second quantity threshold are both 3.

(2) If the first quantity is less than the first quantity threshold and the second quantity is less than the second quantity threshold, the current operation technology device is determined as an existing asset.

That the first quantity is less than the first quantity threshold indicates that a small quantity of attributes of the current operation technology device are changed. That the second quantity is less than the second quantity threshold indicates that a small quantity of attribute groups of the current operation technology device are changed. Since a small quantity of attributes and a small quantity of attribute groups of the current operation technology device are changed, the current operation technology device is determined as an existing asset.

(3) If the first quantity is greater than the first quantity threshold, the second quantity is less than the second quantity threshold, and the differential attributes include a preset distinguishing attribute, the current operation technology device is determined as a new asset.

That the first quantity is greater than the first quantity threshold and the second quantity is less than the second quantity threshold indicates that a large quantity of attributes of the current operation technology device are changed, and a small quantity of attribute groups of the current operation technology device are changed. To be specific, the changed attributes are concentrated in a few attribute groups. On such a basis, if the differential attributes include an important distinguishing attribute, to be specific, the important distinguishing attribute is changed, the current operation technology device is determined as a new asset. If the differential attributes do not include the important distinguishing attribute, to be specific, the important distinguishing attribute is not changed, the current operation technology device is determined as an existing asset.

The distinguishing attribute is an important attribute of the current operation technology device, and there may be one or more distinguishing attributes. If there are a plurality of distinguishing attributes, while the first quantity is greater than the first quantity threshold and the second quantity is less than the second quantity threshold, if all the distinguishing attributes are differential attributes, the current operation technology device is determined as a new asset. If only some of the distinguishing attributes are differential attributes, the current operation technology device is determined as an existing asset.

In an example, each IP address and each key application are distinguishing attributes. While the first quantity is greater than the first quantity threshold and the second quantity is less than the second quantity threshold, if each IP address and each key application of the current operation technology device are changed, the current operation technology device is determined as a new asset.

In this embodiment of this application, a first quantity is compared with a first quantity threshold, a second quantity is compared with a second quantity threshold, and an asset type of a current operation technology device is determined based on a quantity comparison result, so that the asset type of the current operation technology device can be quickly and accurately determined. This ensures the efficiency and accuracy of asset information management. When the first quantity is greater than the first quantity threshold and the second quantity is less than the second quantity threshold, the asset type of the current operation technology device is determined based on whether an important distinguishing attribute is changed. This makes an asset type identification result meet a requirement for security monitoring of the operation technology device while ensuring that the asset type of the current operation technology device can be identified, thereby improving the applicability of the asset information management method.

The first quantity is a quantity of differential attributes, and the second quantity is a quantity of differential attribute groups. The first quantity reflects an attribute change degree of the current operation technology device from a smaller-granularity attribute perspective, and the second quantity reflects the attribute change degree of the current operation technology device from a larger-granularity attribute group perspective. An attribute change status of the current operation technology device can be reflected more comprehensively with reference to the first quantity and the second quantity. Therefore, determining the asset type of the current operation technology device may be determined based on the first quantity and the second quantity can ensure the accuracy and appropriateness of identifying the asset type of the current operation technology device.

In a possible implementation, after the differential attribute and the differential attribute group are determined, the plurality of attribute groups may be classified into a plurality of attribute types according to the attribute type configuration information. Each attribute type includes at least one attribute group, and different attribute types include different attribute groups. A first reference value is calculated based on a quantity of the differential attributes included in each attribute type and a type weight, and a second reference value is calculated based on a quantity of the differential attribute groups included in each attribute type and a type weight.

A corresponding type weight is preset for each attribute type, and type weights corresponding to different attribute types may be the same or different. After the attribute groups are classified into the plurality of attribute types, a quantity of differential attribute groups included in each attribute type and a quantity of differential attributes may be determined.

Based on the quantity of differential attributes included in each attribute type and the corresponding type weight, the first reference value may be calculated by using the following formula (1).

$$H_1 = \sum_{i=1}^{N} k_i M_i \#(1)$$

$H_1$ is used for representing the first reference value, $k_i$ is used for representing a type weight corresponding to an $i^{th}$ attribute type, $M_i$ is used for representing a quantity of differential attributes included in the $i^{th}$ attribute type, and $N$ is used for representing a quantity of attribute types.

Based on the quantity of differential attribute groups included in each attribute type and the corresponding type weight, the second reference value may be calculated by using the following formula (2).

$$H_2 = \sum_{i=1}^{N} k_i O_i \#(2)$$

$H_2$ is used for representing the second reference value, $k_i$ is used for representing a type weight corresponding to an $i^{th}$ attribute type, $O_i$ is used for representing a quantity of differential attribute groups included in the $i^{th}$ attribute type, and $N$ is used for representing a quantity of attribute types.

It should be noted that in addition to calculating the first reference value by using the foregoing formula (1), the first reference value may be calculated in another manner. For example, a product of the percentage of differential attributes in each attribute type and a type weight corresponding to the attribute type may be calculated, to obtain a first intermediate value corresponding to the attribute type. Then, the first intermediate values corresponding to the attribute types are summed, to obtain the first reference value. In addition to calculating the second reference value by using the foregoing formula (2), the second reference value may be calculated in another manner. For example, a product of the percentage of differential attribute groups in each attribute type and a type weight corresponding to the attribute type may be calculated, to obtain a second intermediate value corresponding to the attribute type. Then, the second intermediate values corresponding to the attribute types are summed, to obtain the second reference value.

After the first reference value and the second reference value are calculated, the asset type of the current operation technology device may be determined based on a magnitude relationship between the first reference value and a reference threshold, as well as a magnitude relationship between the second reference value and a reference threshold. Specifically, the asset type of the current operation technology device may be determined according to the following rules:

(1) If the first reference value is greater than a first reference threshold and the second reference value is greater than a second reference threshold, the current operation technology device is determined as a new asset.

The first reference threshold and the second reference threshold are preset thresholds. A magnitude relationship between the first reference threshold and the second reference threshold is not limited in this embodiment of this application. For example, the first reference threshold may be greater than or equal to the second reference threshold, or the first reference threshold may be less than the second reference threshold. In an example, the first reference threshold is 0.3, and the second reference threshold is 0.5. In another example, the first reference threshold and the second reference threshold are both 0.4.

(2) If the first reference value is less than the first reference threshold and the second reference value is less than the second reference threshold, the current operation technology device is determined as an existing asset.

(3) If the first reference value is greater than the first reference threshold, the second reference value is less than the second reference threshold, and the differential attributes include a preset distinguishing attribute, the current operation technology device is determined as a new asset.

The distinguishing attribute is an important attribute of the current operation technology device, and there may be one or more distinguishing attributes. If there are a plurality of distinguishing attributes, while the first reference value is greater than the first reference threshold and the second reference value is less than the second reference threshold, if all the distinguishing attributes are differential attributes, the current operation technology device is determined as a new asset. If only some of the distinguishing attributes are differential attributes, the current operation technology device is determined as an existing asset.

In an example, each IP address and each key application are distinguishing attributes. While the first reference value is greater than the first reference threshold and the second reference value is less than the second reference threshold, if each IP address and each key application of the current operation technology device are changed, the current operation technology device is determined as a new asset.

It should be noted that while the attribute groups are classified into the plurality of attribute types, when the key attribute information is determined from the first asset information, all attribute information of the current operation technology device in the first asset information may be determined as the key attribute information. To be specific, the attribute types include attributes related to the first asset information, so that the asset type of the current operation technology device can be determined based on all the attribute information included in the first asset information. For example, if attributes included in the first asset information include an asset IP address, an asset MAC address, an asset port, an asset name, asset operating system information, asset key application information, an asset device certificate, and an asset application certificate, a set of attributes included in the attribute types includes the asset IP address, the asset MAC address, the asset port, the asset name, the asset operating system information, the asset key application information, the asset device certificate, and the asset application certificate.

In this embodiment of this application, a plurality of attribute groups corresponding to key attribute information are classified into a plurality of attribute types, and corresponding type weights are set for the attribute types based on importance of attributes included in the attribute types to a current operation technology device. A first reference value is calculated based on a quantity of differential attributes included in the attribute types and type weights. A second reference value is calculated based on the quantity of differential attribute groups included in the attribute types and type weights. The first reference value reflects an attribute change degree of the current operation technology device from a smaller-granularity attribute perspective, and the second reference value reflects the attribute change degree of the current operation technology device from a larger-granularity attribute group perspective. An attribute change status of the current operation technology device can be reflected more comprehensively with reference to the first reference value and the second reference value. Therefore, determining the asset type of the current operation technology device based on the first reference value and the second reference value can ensure the accuracy and appropriateness of identifying the asset type of the current operation technology device.

The first reference value and the second reference value are calculated based on the type weights, so that the importance of attributes included in the attribute type for the current operation technology device matches the contribution of the attribute type to the first reference value and the second reference value, and the first reference value and the second reference value not only can reflect a quantity of changed attributes, but also can reflect the importance of the changed attributes for the current operation technology device. Therefore, when the asset type of the current operation technology device is determined based on the first reference value and the second reference value, an asset type identification result can be more accurate.

In a possible implementation, after the asset type of the current operation technology device is determined, the first asset information is processed based on the asset type of the current operation technology device. If the current operation technology device is a new asset, an asset identifier is allocated to the current operation technology device, the first asset information is stored into an asset information database, and security related data of the current operation technology device is associated with the asset identifier of the current operation technology device. If the current operation technology device is an existing device, the asset information of the current operation technology device in the asset information database is updated based on the first asset information.

If the current operation technology device is determined as a new asset, a new asset ID is allocated to the current operation technology device, to perform asset information management on the new asset. After the asset ID is allocated to the current operation technology device, the first asset information is stored into the asset information database, and security related data of the current operation technology device is associated with the allocated asset ID, so as to facilitate security monitoring and security analysis on the current operation technology device. The security related data includes configuration information, log information, account information, process and service information, and the like. The security of the operation technology device may be analyzed based on the security related data.

If the current operation technology device is determined as an existing asset, the asset information of the current operation technology device in the asset information database is updated based on an unchanged key attribute in the first asset information, so that the updated asset information matches the first asset information.

In this embodiment of this application, first asset information is correspondingly processed based on an asset type of a current operation technology device, to automatically create and update asset information, and manual participation is not needed in an asset information management process, thereby improving the security, reliability, and timeliness of asset information management.

Asset Information Management Apparatus

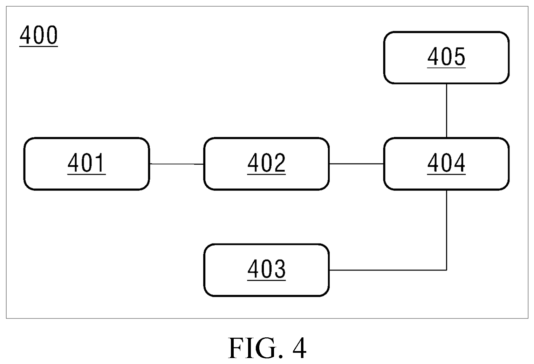

FIG. 4 is a schematic diagram of an asset information management apparatus according to an embodiment of this application. As shown in FIG. 4, an asset information management apparatus 400 includes:

a first obtaining unit 401, configured to obtain first asset information of a current operation technology device in an industrial network;

an extraction unit 402, configured to determine key attribute information from the first asset information, where the key attribute information includes a value of a key attribute of the current operation technology device;

a second obtaining unit 403, configured to obtain second asset information from an asset information database, where the second asset information includes asset information of an operation technology device in the industrial network;

an analysis unit 404, configured to determine an asset type of the current operation technology device based on the key attribute information and the second asset information; and

a processing unit 405, configured to process the first asset information based on the asset type of the current operation technology device.

In this embodiment of this application, after the first obtaining unit 401 obtains first asset information of a current operation technology device, the extraction unit 402 extracts key attribute information from the first asset information, the analysis unit 404 determines an asset type of the current operation technology device based on the key attribute information and second asset information obtained from an asset information database, and then the processing unit 405 correspondingly processes the first asset information based on the asset type of the current operation technology device. The asset type of the current operation technology device may indicate whether the current operation technology device is an existing asset or a new asset. The first asset information is processed based on the asset type of the current operation technology device, to implement automatic management of asset information. Manual participation is not needed in an asset information management process, and labor costs in the asset information management process are reduced, thereby reducing costs of asset information management.

It should be noted that content such as interaction between parts of the foregoing asset information management apparatus and the foregoing asset information management method embodiments are based on the same concept. For specific content and beneficial effects, refer to the descriptions in the foregoing asset information management method embodiments. Details are not described herein again.

Electronic Device

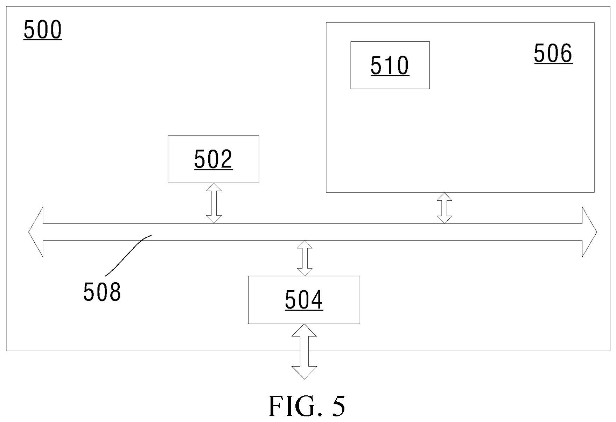

FIG. 5 is a schematic diagram of an electronic device according to an embodiment of this application. Specific embodiments of this application do not limit specific implementations of the electronic device. Referring to FIG. 5, an electronic device 500 provided in this embodiment of this application includes: a processor (processor) 502, a communications interface (Communications Interface) 504, a memory (memory) 506, and a bus 508. In the electronic device: The processor 502, the communications interface 504, and the memory 506 communicate with each other via the bus 508.

The communications interface 504 is configured to communicate with another electronic device or server.

The processor 502 is configured to execute a program 510. Specifically, related steps in the foregoing asset information management method embodiments may be performed.

Specifically, the program 510 may include program code. The program code includes computer operation instructions.

The processor 502 may be a central processing unit CPU or an application specific integrated circuit ASIC (Application Specific Integrated Circuit), or may be configured as one or more integrated circuits for implementing this embodiment of this application. One or more processors included in an electronic device may be processors of a same type, for example, one or more CPUs, or may be processors of different types, for example, one or more CPUs and one or more ASICs.

The memory 506 is configured to store the program 510. The memory 506 may include a high-speed RAM, or may further include a non-volatile memory (non-volatile memory), for example, at least one magnetic disk storage.

The program 510 may be specifically configured for causing the processor 502 to perform the asset information management method in any one of the foregoing embodiments.

For specific implementation of steps in the program 510, refer to corresponding descriptions in corresponding steps and units in the foregoing asset information management method embodiments. Details are not described herein again. A person skilled in the art may clearly understand that, to achieve convenient and concise description, for specific working processes of the foregoing device and module, refer to descriptions of corresponding processes in the foregoing method embodiments. Details are not described herein again.

According to the electronic device in this embodiment, after first asset information of a current operation technology device is obtained, key attribute information is extracted from the first asset information, an asset type of the current operation technology device is determined based on the key attribute information and second asset information obtained from an asset information database, and then the first asset information is correspondingly processed based on the asset type of the current operation technology device. The asset type of the current operation technology device may indicate whether the current operation technology device is an existing asset or a new asset. The first asset information is processed based on the asset type of the current operation technology device, to implement automatic management of asset information. Manual participation is not needed in an asset information management process, and labor costs in the asset information management process are reduced, thereby reducing costs of asset information management.

Computer-Readable Storage Medium

This application further provides a computer-readable storage medium, storing instructions for causing a machine to perform the asset information management method as described herein. Specifically, a system or apparatus equipped with a storage medium may be provided. The storage medium stores software program code that implements functions of any one of the foregoing embodiments, and a computer (or a CPU or an MPU) of the system or apparatus is caused to read and execute the program code stored in the storage medium.

In this case, the program code read from the storage medium may implement the functions of any one of the foregoing embodiments. Therefore, the program code and the storage medium for storing the program code constitute a part of this application.

Embodiments of the storage medium for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a non-volatile storage card, and a ROM. Optionally, the program code may be downloaded from a server computer over a communication network.

In addition, it should be clear that not only the program code read by the computer may be executed, but also an operating system and the like operated on the computer may be enabled to complete some or all actual operations based on instructions of the program code, so as to implement the functions of any one of the foregoing embodiments.

In addition, it may be understood that the program code read from the storage medium is written into a memory disposed in an expansion board inserted into the computer or is written into a memory disposed in an expansion module connected to the computer, and subsequently, a CPU or the like installed on the expansion board or the expansion module is enabled to perform some or all actual operations based on the instructions of the program code, so as to implement the functions of any one of the foregoing embodiments.

Computer Program Product

An embodiment of this application further provides a computer program product. The computer program product is tangibly stored in a computer-readable medium and includes computer-executable instructions. The computer-executable instructions, when executed, cause at least one processor to perform a asset information management method provided in the foregoing embodiments. It should be understood that the solutions in this embodiment have corresponding technical effects in the foregoing method embodiments. Details are not described herein again.

It should be noted that not all steps and modules in the procedures and the structural diagrams of apparatuses are necessary, and some steps or modules may be omitted according to an actual requirement. An execution sequence of the steps is not fixed and may be adjusted according to a requirement. The system structures described in the foregoing embodiments may be physical structures or logical structures. To be specific, some modules may be implemented by a same physical entity. Alternatively, some modules may be implemented by a plurality of physical entities, or may be implemented by some components in a plurality of independent devices together.

Nouns and pronouns about people in this patent application are not limited to specific genders.

In the foregoing embodiments, hardware modules may be implemented mechanically or electrically. For example, a hardware module may include a permanent special-purpose circuit or logic (e.g., a dedicated processor, FPGA, or ASIC) to complete a corresponding operation. The hardware module may further include programmable logic or a circuit (e.g., a generalpurpose processor or another programmable processor), which may be temporarily set by using software to complete a corresponding operation. A specific implementation (a mechanical manner, a special-purpose permanent circuit, or a temporarily set circuit) may be determined based on costs and time considerations.

This application is shown and described in detail above through the accompanying drawings and preferred embodiments. However, this application is not limited to these disclosed embodiments. Based on the foregoing plurality of embodiments, a person skilled in the art may learn that code review means in the foregoing different embodiments may be combined to obtain more embodiments of this application, and these embodiments also fall within the protection scope of this application.

**Claims**

1. An asset information management method (100), comprising:

   obtaining first asset information of a current operation technology device in an industrial network;
   determining key attribute information from the first asset information, wherein the key attribute information comprises a value of a key attribute of the current operation technology device;
   obtaining second asset information from an asset information database, wherein the second asset information comprises asset information of an operation technology device in the industrial network;
   determining an asset type of the current operation technology device based on the key attribute information and the second asset information; and
   processing the first asset information based on the asset type of the current operation technology device.

2. The method according to claim 1, wherein the obtaining first asset information of a current operation technology device in an industrial network comprises:

   acquiring traffic data of the current operation technology device from a mirror port of a switch connected to the current operation technology device, and extracting attribute information of the current operation technology device from the traffic data as the first asset information;
   and/or,
   acquiring, by using an agent program set in the current operation technology device, attribute information of the current operation technology device as the first asset information.

3. The method according to claim 1, wherein the determining key attribute information from the first asset information comprises:

   determining a key attribute of the current operation technology device based on the key attribute configuration information; and
   extracting a value of the key attribute of the operation technology device from the first asset information, and determining the extracted value of the key attribute as the key attribute information.

4. The method according to claim 1, wherein the determining an asset type of the current operation technology device based on the key attribute information and the second asset information comprises:

   determining, if the second asset information does not comprise the key attribute information, the current operation technology device as a new asset; or
   determining, if the second asset information comprises at least a portion of the key attribute information, the asset type of the current operation technology device based on a matching degree between the key attribute information and the second asset information.

5. The method according to claim 4, wherein the determining the asset type of the current operation technology device based on a matching degree between the key attribute information and the second asset information comprises:

   classifying, based on attribute type configuration information, a plurality of attributes corresponding to the key attribute information into a plurality of attribute groups, wherein each attribute group comprises at least one attribute, and different attribute groups comprise different attributes;
   determining attributes corresponding to different values in the key attribute information and the second asset information as differential attributes;
   determining the attribute group comprising at least one differential attribute as a differential attribute group; and
   determining the asset type of the current operation technology device based on the differential attribute and the differential attribute group.

6. The method according to claim 5, wherein the determining the asset type of the current operation technology device based on the differential attribute and the differential attribute group comprises:

determining a first quantity of the differential attributes and a second quantity of the differential attribute groups; and

determining, if the first quantity is greater than a first quantity threshold and the second quantity is greater than a second quantity threshold, the current operation technology device as a new asset; or

determining, if the first quantity is less than the first quantity threshold and the second quantity is less than the second quantity threshold, the current operation technology device as an existing asset; or

determining, if the first quantity is greater than the first quantity threshold, the second quantity is less than the second quantity threshold, and the differential attributes comprise a preset distinguishing attribute, the current operation technology device as a new asset.

7. The method according to claim 5, wherein the determining the asset type of the current operation technology device based on the differential attribute and the differential attribute group comprises:

classifying, based on the attribute type configuration information, the plurality of attribute groups into a plurality of attribute types, wherein each attribute type comprises at least one attribute group, and different attribute types comprise different attribute groups;

calculating a first reference value based on a quantity of the differential attributes comprised in each attribute type and a type weight;

calculating a second reference value based on a quantity of the differential attribute groups comprised in each attribute type and a type weight; and

determining, if the first reference value is greater than a first reference value threshold and the second reference value is greater than a second reference value threshold, the current operation technology device as a new asset; or

determining, if the first reference value is less than the first reference value threshold and the second reference value is less than the second reference value threshold, the current operation technology device as an existing asset; or

determining, if the first reference value is greater than the first reference value threshold, the second reference value is less than the second reference value threshold, and the differential attributes comprise a preset distinguishing attribute, the current operation technology device as a new asset.

8. The method according to claim 6 or 7, wherein the processing the first asset information based on the asset type of the current operation technology device comprises:

allocating, if the current operation technology device is a new asset, an asset identifier to the current operation technology device, storing the first asset information into the asset information database, and associating security related data of the current operation technology device with the asset identifier of the current operation technology device; or

updating, if the current operation technology device is an existing device, the asset information of the current operation technology device in the asset information database based on the first asset information.

9. An asset information management apparatus (400), comprising:

a first obtaining unit (401), configured to obtain first asset information of a current operation technology device in an industrial network;

an extraction unit (402), configured to determine key attribute information from the first asset information, wherein the key attribute information comprises a value of a key attribute of the current operation technology device;

a second obtaining unit (403), configured to obtain second asset information from an asset information database, wherein the second asset information comprises asset information of an operation technology device in the industrial network;

an analysis unit (404), configured to determine an asset type of the current operation technology device based on the key attribute information and the second asset information; and

a processing unit (405), configured to process the first asset information based on the asset type of the current operation technology device.

10. An electronic device (500), comprising: a processor (502), a communications interface (504), a memory (506), and a bus (508), wherein the processor (502), the communications interface (504), and the memory (506) communicate with each other via the bus (508); and

the memory (506) is configured to store at least one executable instruction, and the executable instruction causes the processor (502) to perform operations corresponding to the asset information management method according to any one of claims 1 to 8.

11. A computer-readable storage medium, having computer instructions stored therein, wherein the computer instructions, when executed by a processor, cause the processor to perform the method according to any one of claims 1 to 8.

12. A computer program product, tangibly stored in a computer-readable medium and comprising computer-executable instructions, wherein the computer-executable instructions, when executed, cause at least one processor to perform the method according to any one of claims 1 to 8.

100

| 101 |
|:---:|

| 102 |
|:---:|

| 103 |
|:---:|

| 104 |
|:---:|

| 105 |
|:---:|

FIG. 1

FIG. 2

FIG. 3

400

405

401 — 402 — 404

403

FIG. 4

FIG. 5

## INTERNATIONAL SEARCH REPORT

| International application No. |
| --- |
| **PCT/CN2023/109388** |

| A. | CLASSIFICATION OF SUBJECT MATTER |
| --- | --- |
| | G06F16/901(2019.01)i |

According to International Patent Classification (IPC) or to both national classification and IPC

| B. | FIELDS SEARCHED |
| --- | --- |

Minimum documentation searched (classification system followed by classification symbols)

IPC:G06F,G06Q

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 资产, 管理, 关键, 属性, 数据库, 匹配, 比较, 类型, 自动化, 新增, 现有, asset, manage, key, attribute, database, match, compare, type, automatic, add, existing

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107809433 A (CHINA UNITED NETWORK COMMUNICATIONS GROUP CO., LTD.) 16 March 2018 (2018-03-16) description, paragraphs 22-75 | 1-12 |
| X | CN 112261175 A (SANGFOR TECHNOLOGIES INC.) 22 January 2021 (2021-01-22) description, paragraphs 80-154 | 1-12 |
| X | CN 116304209 A (CHINA UNITED NETWORK COMMUNICATIONS GROUP CO., LTD. et al.) 23 June 2023 (2023-06-23) description, paragraphs 36-146 | 1-12 |
| A | CN 112749311 A (SIEMENS AG) 04 May 2021 (2021-05-04) entire document | 1-12 |
| A | CN 116070218 A (BEIJING LIUFANGYUN INFORMATION TECHNOLOGY CO., LTD. et al.) 05 May 2023 (2023-05-05) entire document | 1-12 |
| A | US 2018211465 A1 (RAY, T. et al.) 26 July 2018 (2018-07-26) entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 March 2024** | **02 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109388**

| Patent document cited in search report | | | Publication date (day/month/year) | Patent family member(s) | | | Publication date (day/month/year) |
|---|---|---|---|---|---|---|---|
| CN | 107809433 | A | 16 March 2018 | CN | 107809433 | B | 07 April 2020 |
| CN | 112261175 | A | 22 January 2021 | CN | 112261175 | B | 12 May 2023 |
| CN | 116304209 | A | 23 June 2023 | | None | | |
| CN | 112749311 | A | 04 May 2021 | | None | | |
| CN | 116070218 | A | 05 May 2023 | CN | 116070218 | B | 30 June 2023 |
| US | 2018211465 | A1 | 26 July 2018 | US | 10580242 | B2 | 03 March 2020 |
| | | | | USRE | 49450 | E | 07 March 2023 |

Form PCT/ISA/210 (patent family annex) (July 2022)